# EUROPÄISCHE PATENTSCHRIFT

(11) **EP 2 067 025 B1**
(45) Veröffentlichungstag und Bekanntmachung des Hinweises auf die Patenterteilung: **24.04.2013**
(21) Anmeldenummer: 07803297.6
(22) Anmeldetag: 06.09.2007
(51) Int. Cl.: G01N 23/04, G06T 7/00, G06T 5/00, B23K 9/095

(54) **VERFAHREN UND VORRICHTUNG ZUR ECHTZEITKONTROLLE VON FÜGEVERBINDUNGEN MIT RÖNTGENSTRAHLUNG UND GRAUWERTAUSWERTUNG**
METHOD AND DEVICE FOR REAL-TIME INSPECTION OF JOINTS
PROCÉDÉ ET DISPOSITIF DE CONTRÔLE EN TEMPS RÉEL DE LIAISONS D'ASSEMBLAGE

(30) Priorität: 26.09.2006 DE 102006000480
(43) Veröffentlichungstag der Anmeldung: 10.06.2009
(73) Patentinhaber: Forschungszentrum Jülich GmbH, 52425 Jülich (DE)
(72) Erfinder: PAULY, Fred, 52428 Jülich (DE); SCHRÖDER, Gerald, 52428 Jülich (DE); PATZAK, Richard, 52076 Aachen (DE); VOGELBRUCH, Jan, 52393 Hürtgenwald (DE)
(74) Vertreter: Gille Hrabal
(86) Internationale Anmeldenummer: PCT/EP2007/059343
(87) Internationale Veröffentlichungsnummer: WO 2008/037580

(56) Entgegenhaltungen:
- US-A1- 2006 055 400
- ROKHLIN: "IN-PROCESS RADIOGRAPHIC EVALUATION OF ARC WELDING" MATERIALS EVALUATION, COLUMBUS, OH, US, Bd. 47, Nr. 2, 1. Februar 1989 (1989-02-01), Seiten 219-224, XP000109031 ISSN: 0025-5327
- VOGELBRUCH, STURM, PATZAK, PRIESE, HALLING: "Bildverarbeitung für die Medizin, S.417-420: 3D Segmentierung mittels hierarchischer Inselstrukturen" 2002, SPRINGER VERLAG , XP002476205 Absatz [0003]; Abbildung 2
- A. GAYAER, A. SAYA, A. SHILOH: "Automatic recognition of welding defects in real-time radiography" NDT INTERNATIONAL, Bd. 23, Nr. 3, Juni 1990 (1990-06), XP002476203
- J.-F. VOGELBRUCH, R. PATZAK, H. HALLING: "3D-Segmentierung und Visualisierung von Volumendatensätzen" CONFERENCE REMAGENER PHYSIKTAGE 2002, 2002, XP002476202
- NIKHIL R. PAL, SANKAR K. PAL: "A review on image segmentation techniques" PATTERN REGOCNITION, Bd. 26, Nr. 9, 1993, Seiten 1277-1294, XP002476204 GB

## Beschreibung

Die Erfindung betrifft ein Verfahren zur Kontrolle von Fügeverbindungen. Eine Fügeverbindung ist eine Verbindung zwischen zwei Werkstücken, die typischerweise durch Schweißen, Löten oder Kleben hergestellt wurde.

Nach dem Stand der Technik wird beispielsweise bei Schweißverbindungen zwischen zwei aus Metall bestehenden Werkstoffen diese mit Hilfe von Röntgenstrahlung überprüft. Beispielsweise eine Schweißnaht, also eine Fügeverbindung wird mit Röntgenstrahlung durchstrahlt und das Ergebnis mit einem Detektor erfasst. Eine nachfolgende elektronische Einrichtung stellt das Ergebnis dar, welches Informationen über die Qualität der Schweißnaht enthält.

Eine Qualitätskontrolle von Fügeverbindungen ist zum einen für die Entwicklung von neuen Fügeverfahren erforderlich. Zum anderen dient eine solche Kontrolle der Qualitätsüberprüfung im Rahmen von Fertigungsprozessen.

In der Regel werden bei Fertigungsprozessen aus Kostengründen Fügeverbindungen nur stichprobenhaft überprüft.

Wünschenswert wäre es, in Echtzeit das Verbinden von zwei Werkstücken überprüfen zu können. Es gibt optische Verfahren, mit denen dies möglich ist. Allerdings wird dabei nur die sichtbare Oberfläche einer Fügeverbindung kontrolliert.

Aus der DE 198 082 75 A1 ist ein Verfahren bekannt, mit dem eine Schweißverbindung in Echtzeit überprüft werden kann und zwar durch Überprüfung von Gasmengen. Dieses Verfahren beschränkt sich nur auf bestimmte Fügeverbindungen und hat in der Praxis sich nicht durchsetzen können.

In S.I.Rokhlen: In-Process Radiographic Evaluation of Arc Welding (Materials Evaluation 47 (1989) No.2) wird ein Echtzeitpräfverfahren für Schweiβnäte beschreben, bei dem die Schweiβnaht mit Röntgenstrahlung durchstrahlt wird und ein Mustererkennungs algorithmus Fehler indentifiziert, woraufhen ein Entscheidungsalgorithmus die Schweiβparcemeter anpasst.

In J.-F. Vogelbruch et al. 3D-Segmentieureng und Visualisierung von Volumen datensätzen (Remagener Physiktage 2002) wird ein Regionenwachstumsverfahren zur Verarbeitung von Graustufen bildern beschrieben, wobei jeweils Regionen mit ähnlichen Grauwerten zusammen gefasst werden. Überlappungsbereiche Können rekursiv getrennt werden.

Aufgabe der Erfindung ist die Schaffung eines universell einsetzbaren Verfahrens und einer zugehörigen Vorrichtung zur Durchführung einer Echtzeit-Qualitätskontrolle von Fügeverbindungen.

Zur Lösung der Aufgabe werden zwei Werkstücke miteinander verbunden und während des Verbindens werden bereits zuvor verbundene Bereiche der zwei Werkstücke mit einer Röntgenstrahlung durchstrahlt. Die Röntgenstrahlung wird im Anschluss an die Durchstrahlung erfasst und so ausgewertet, dass fehlerhafte Stellen von bereits verbundenen Bereichen ermittelt werden.

Vorzugsweise wird nicht nur der Bereich einer bereits fertig gestellten Verbindung durchstrahlt, sondern zusätzlich auch der Bereich, der zusammengefügt wird. Es wird dann nicht nur eine bereits fertig gestellte Fügeverbindung überprüft, sondern auch der Vorgang des Zusammenfügens. Fehler können so besser aufgespürt und frühzeitiger erkannt werden. Es kann so eher korrigierend in das Geschehen eingegriffen werden. Die Qualität einer Herstellung verbessert sich entsprechend.

Zwar erscheint es einem Fachmann wünschenswert, ein solches anspruchgemäßes Verfahren durchführen zu können. Dem Fachmann stand jedoch bisher kein Weg zur Verfügung, um ein solches Verfahren ausführen zu können, bei dem nicht nur oberflächlich eine Fügeverbindung in Echtzeit kontrolliert wird. Problematisch war zum einen, die Auswertung der Strahlung schnell genug durchführen zu können. Zum anderen mussten konstruktive Probleme gelöst werden.

Im Anschluss an die Durchstrahlung einer Fügeverbindung wird die Röntgenstrahlung durch einen Detektor digital ortsabhängig in Form von sogenannten Grauwerten erfasst. Um nun qualitativ stabil die Grauwerte auswerten zu können, werden räumlich benachbart liegende Bildpunkte (Pixel im zweidimensionalen Fall bzw. Voxel im dreidimensionalen Fall) zu Regionen zusammengefasst, wenn die Grauwerte der Bildpunkte ähnlich genug sind. Die Grauwerte sind ähnlich genug, wenn der jeweils betrachte Abstand zwischen zwei Grauwerten unterhalb eines vorgegebenen Schwellwertes liegt. Dieser Schritt hat sich als hilfreich herausgestellt, um die erfasste Röntgenstrahlung schnell genug in Echtzeit auswerten zu können. Die zusammengefassten Bildpunkte werden in einer Datenbasis registriert.

Die Grauwertskala reicht typischerweise von 0 bis 255 (8-bit Auflösung). 0 bedeutet "schwarz". 255 bedeutet "weiß". In einem solchen Fall hat es sich als zweckmäßig erwiesen, einen Grauwertabstand von ca. 4-6 Einheiten vorzugeben, der unterschritten werden muss, um Grauwerte zu einer Region zusammenzufassen. Das Ergebnis des Verfahrens wird genutzt, um die während des Verbindens aufgetretenen Fehler selbst dann sichtbar zu machen, wenn ein Fehler nicht von außen sichtbar ist. U.a. hat sich dieser Schritt aufgrund seiner inhärenten Parallelität auch als hilfreich herausgestellt, um die während des Verbindens aufgetretenen Fehler selbst dann sichtbar zu machen, wenn ein Fehler nicht von außen sichtbar ist.

In einer Ausgestaltung des Verfahrens wird beispielsweise im zweidimensionalen Fall die hexagonale Nachbarschaft eines ersten Pixels betrachtet. Innerhalb dieses Bereichs, auch Insel genannt, werden benachbarte Pixel mittels eines Linking-Verfahrens (simple, centrois, weighted, best Fit) zu einer Region zusammengefasst, die einen hinreichend geringen Grauwertabstand aufweisen, also ähnlich sind. In dieser Form werden nach und nach benachbart liegende Pixel (bzw. im dreidimensionalen Fall) Voxel zu Regionen zusammengefasst, die im Beispielsfall aus nicht mehr als sieben Pixel bestehen. Jeder so zusammengefassten Region wird im Anschluss ein Grauwert zugeordnet, der den Mittelwert der Grauwerte bildet die zur jeweiligen Region gehören. Beispielsweise sei eine solche Region aus drei benachbarten Pixel bzw. Voxel hervorgegangen, die die Grauwerte 1, 2 sowie 3 hatten. Diese Region erhält daher nun den Grauwert 2. Nachfolgend werden diese Regionen einer Ebene 1 genannt

Im Anschluss daran werden nun die Regionen dieser Ebene 1 wie zuvor die Pixel bzw. Voxel behandelt. Es wird die beispielsweise hexagonale Insel - Nachbarschaft der Insel mit der ersten Region der Ebene 1 betrachtet. Die Regionen dieser Ebene 1 in benachbarten Inseln werden mit der ersten Region zu einer übergeordneten Region - nachfolgend Region der Ebene 2 genannt - dann zusammengefasst, wenn ein hinreichend geringer Grauwertabstand vorliegt. Maßgeblich sind dabei die durch Mittelwertbildung den Regionen der Ebene 1 zugeordneten Grauwerte. Vorzugsweise wird ferner nur dann zusammengefasst, wenn eine weitere Bedingung erfüllt ist, nämlich wenn sich die entsprechenden Regionen in benachbarten Inseln mit der ersten Region im Überlappungsbereich ihrer Inseln überlappen. In dieser Form werden nach und nach benachbart liegende Regionen der Ebene 1 zu Regionen der Ebene 2 zusammengefasst. Eine so entstandene Region der Ebene 2 erhält wiederum einen Grauwert, der den Mittelwert der Grauwerte der zugehörigen Regionen der Ebene 1 darstellt. Im Anschluss daran werden die so entstandenen Regionen der Ebene 2 wie zuvor die Pixel bzw. Voxel bzw. die Regionen der Ebene 1 behandelt, also zu Regionen der Ebene 3 zusammengefasst. Diese ebenenförmige Zusammenfassung von Regionen von einer Ebene zur nächsten erfolgt vorzugsweise so lange, bis die Zusammenfassung in einer das ganze Bild abdeckenden Insel durchgeführt wurde. Diese Form der Zusammenfassung erfordert insbesondere im Fall einer parallelen Implementierung einen hinreichend geringen Rechenaufwand, um in Echtzeit die Röntgenstrahlung auswerten zu können. Wenn nicht parallel implementiert wurde, ist möglicherweise das Verfahren nicht sehr schnell, liefert aber qualitativ sehr gute Ergebnisse. Die zusammengefassten Regionen beinhalten eine Information über die Qualität der unmittelbar zuvor entstandenen Fügeverbindung und ermöglicht in diesem Sinne eine Qualitätskontrolle noch während des Verbindens sowie unmittelbar im Anschluss daran.

In einer Ausgestaltung des Verfahrens werden also zunächst Regionen der Ebene 1 aus Pixeln bzw. Voxeln gebildet. Im Anschluss daran werden aber nur solche Regionen der Ebene 1 zu Regionen der Ebene 2 zusammengefasst, die einerseits überlappen und deren Grauwertabstände andererseits unterhalb eines vorgegebenen Schwellwertes liegen. Zwei Regionen der Ebene 1 überlappen, wenn es wenigstens einen Pixel bzw. Voxel gibt, der zu beiden Regionen der Ebene 1 gehört. In gleicher Weise werden Regionen der Ebene 2 zu Regionen der Ebene 3 zusammengefasst, also wenn Regionen der Ebene 2 einerseits überlappen und andererseits einen hinreichend geringen Grauwertabstand aufweisen, der unterhalb eines vorgegebenen Schwellwertes liegt. Zwei Regionen der Ebene 2 überlappen, wenn es wenigstens eine Region der Ebene 1 gibt, die zu beiden Regionen der Ebene 2 gehört. Vorzugsweise wird diese Form des Zusammenfassen erst beendet, wenn die beiden Bedingungen nicht mehr erfüllt werden und also keine weitere Zusammenfassung mehr möglich ist.

Um die Qualität der Information über Fehler zu verbessern, werden im Anschluss an das Zusammenfassen überlappende Bereiche von Regionen der höchsten Ebene getrennt und nur einer Region der höchsten bzw. obersten zugeordnet. Beispielsweise bestehe eine erste Region a der obersten Ebene aus Regionen I, II, III, IV und V einer darunter liegenden Ebene. Eine zweite Region b der obersten Ebene bestehe aus Regionen IV, V, VI und VII einer darunter liegenden Ebene. Damit gibt es bei den beiden Regionen a und b der obersten Ebene eine Überlappung und zwar in Bezug auf die Regionen IV und V der darunter liegenden Ebene. Diese Regionen IV und V werden nun so abgetrennt, dass diese nur noch zu einer Region a oder b der obersten Ebene gehören, beispielsweise beide zur ersten Region a der obersten Ebene oder beide zur zweiten Region b der obersten Ebene oder aber die Region IV der darunter liegenden Ebene gehöre nur noch zur ersten Region a der obersten Ebene und die Region V der darunter liegenden Ebene gehöre nur noch zur zweiten Region b der obersten Ebene oder umgekehrt. Eine solche Trennung kann auch auf tiefere Ebenen ausgedehnt werden und zwar idealerweise bis zur Ebene der Pixel bzw. Voxel.

In einer Ausführungsform des Verfahrens wird wie folgt getrennt: Im Überlappungsbereich zweier nicht mehr zusammenfassbarer Regionen a und b wird eine Ebene tiefer eine zusammengefasste, diesem Überlappungsbereich zugeordnete Region betrachtet und festgestellt, zur welcher Region auf der höheren Ebene diese zusammengefasste Region der tiefen Ebene aufgrund des Grauwertunterschiedes eher gehört, beispielsweise eher zur Region a oder eher zur Region b. Beispielsweise sei der Grauwertabstand zur Region a kleiner gewesen, so dass die betrachtete Region aus der darunter befindlichen Ebene der Region a zugeordnet wird. Entsprechend wird sie zugeordnet. Auf diese Weise werden die Überlappungsbereiche nur noch einer Region auf der Ebene der nicht mehr zusammenfassbaren Regionen getrennt. Schließlich gibt es auf dieser Ebene der höchsten Stufe keine Bereiche mehr, die zwei oder mehreren Regionen der höchsten Ebene angehören. Regionen der höchsten Ebene weisen daher keine Überlappungsbereiche mehr auf.

In einer Ausführungsform wird die Trennung während des Zusammenfassens registriert und pro hierarchische Ebene initiiert.

Um weiter verbessert zu trennen, wird in einer Ausführungsform eine Ebene tiefer die selbe Vorgehensweise durchgeführt. Es wird beispielsweise die gerade der Region a zugeordnete Regionen der darunter liegenden Ebene - nachfolgend Subregionen genannt - betrachtet und überprüft, mit welchen Subregionen der Region b sich diese in Subsubregionen überlappt. Diese werden wie nach dem oben beschriebenen Verfahren wieder zugeordnet, wobei der Grauwertabstand der Subsubregion zum Grauwert der initialen "Trennungs" - Regionen a und b maßgeblich sind. So wird das Verfahren vorzugsweise fortgesetzt, bis die Ebene der Pixel bzw. Voxel erreicht ist.

Auf diese Weise gelingt eine sehr genaue Trennung im Überlappungsbereich. Die erhaltene Information über die Strukturen innerhalb der Fügeverbindung und damit auch die Information über Größe und Lage von Fehlern sind entsprechend genau.

Der Nachteil dieses Verfahrens ist, dass es rekursiv durchgeführt werden muss und damit relativ viel Rechenzeit verwendet wird. Im dreidimensionalen Fall kann es vorkommen, dass Bereiche übergangen werden. Problematisch bei dem Verfahren kann weiter sein, dass auf höheren Ebenen zusammenhängende Regionen durch die Auftrennung schließlich nicht mehr zusammenhängen. Entweder muss nun die Region nach wie vor als zusammenhängend betrachtet werden, was eine Ungenauigkeit zur Konsequenz hat oder aber es muss wieder aufwärts gehend überprüft werden, inwieweit korrekt auf Basis der zu zwei oder mehreren Teilregionen zerfallenen Region zusammenzufassen ist. Dies erhöht wiederum den Aufwand. Um schneller und genauer trennen zu können, wird daher das nachfolgend genannte Verfahren zur Trennung bevorzugt.

Von der höchsten Ebene der Regionen ausgehend werden die Regionen eine Ebene darunter betrachtet. Auf dieser niedrigeren Ebene wird Region für Region betrachtet. Wird eine erste Region betrachtet, wird überprüft, ob diese Region mit zwei verschiedenen Regionen der höchsten Ebene, im folgenden Väter genannt, verbunden ist, also zu einem Überlappungsbereich gehört. Ist also eine darunter liegende Region, im folgenden Kind genannt, mit zwei verschiedenen Vätern verbunden, so handelt es sich um einen trennenden Überlappungsbereich. Nun wird überprüft, zu welchem "Vater" der Grauwertabstand geringer ist, welches Kind also welchem Vater "ähnlicher" ist. Diesem ähnlicheren Vater wird das Kind alleine zugeordnet. Von diesem Vater erbt das Kind den Grauwert und in einer Ausführungsform der Erfindung insbesondere auch eine Segmentnummer, die der Vater zur eindeutigen Identifizierung des Segments erhalten hat. Das Kind erhält also zumindest einen neuen Grauwert und in Abhängigkeit von der Ausführungsform der Erfindung eine Segmentnummer.

Ist jede Region der Kinder betrachtet worden, so wird vorzugsweise die darunter liegende Ebene anschließend in vergleichbarer Weise bearbeitet und erbt die propagierten Segmenteigenschaften der höheren Ebene. Dieses Verfahren zur Auftrennung wird in dieser Weise idealerweise bis auf die Pixelebene fortgesetzt, so dass jedem Pixel eine Segmentnummer, aus dem sich ein Labelbild darstellen lässt, und ein Grauwert, aus dem sich ein Regionenbild erzeugen lässt, zugeordnet ist und in einer Ausführungsform der Erfindung zusätzlich eine Segmentliste Eigenschaften über die Segmente (Mittlerer Grauwert, Flächeninhalt, Schwerpunkt, Ausdehnung) enthält. Werden tiefere Ebenen abgearbeitet, so sind folgende Besonderheiten zu beachten: Wird von einer Region der Ebene x festgestellt, dass beide Väter der Ebene x+1 innerhalb einer vorgegebenen Grauwerttoleranz liegen, so werden die Väter der Ebene x+1 zu einer neuen Vaterregion zusammengefasst (X ist eine ganze positive Zahl). Die beiden Väter haben also sozusagen den gleichen Großvater. Bisher propagierte Segmentnummern bzw. Grauwerte auf die Ebene bzw. Verbindungen anderer Kinder zu diesen Vätern werden entsprechend überprüft und aktualisiert. Dies lässt sich durch Indirektionen in der mit der Datenbasis (Registrierung der Regionen und ihrer hierarchischen Verbundenheit) verbundenen Segmentliste (Registrierung der Segmente und ihrer Eigenschaften) effektiv lösen. Es wird so erreicht, dass schließlich jedes Kind die Eigenschaften eines Vaters erbt (Propagierung). Kinder können in der Datenbasis weiterhin zwei Väter haben, erben aber nur von einem die Eigenschaften.

Wird das Verfahren zur Auftrennung in dieser Weise bis in unterste Ebenen, also idealerweise bis auf die Pixelebene bzw. Voxelebene fortgesetzt, so werden Väter nicht nur durch Grauwerte, sondern je nach Ausführungsform der Erfindung ergänzend durch eine Segmentnummerierung charakterisiert. In gleicher Weise wie der Grauwert wird die jeweilige Segmentnummer herunter transformiert auf die Kinder.

Im dreidimensionalen Fall (3D) existiert keine so ideale Inselstruktur wie die hexagonale im zweidimensionalen Fall (2D), die all deren Eigenschaften hat. Im 3D besteht die einfach überlappende Inselstruktur aus der Knoten-an-Knoten Pflasterung eines Rhombendodekaeders. Durch diese Pflasterung entstehen zwar eine vollständig einfach überlappende Struktur, allerdings nicht mit homogenen Nachbarschaftsbeziehungen der Randvoxel einer Insel. Die Folge ist, dass es Überlappungen zwischen Inseln gibt, die nicht in den Bereich einer Insel der nächst höheren Insel fallen. Somit werden diese Überlappungen durch den Verknüpfungsalgorithmus, der sich ja nur auf den Bereich innerhalb einer Insel beschränkt, nicht untersucht. Dies hat zur Folge, dass Regionen über solche Fehlstellen zusammenhängen können, obwohl sie nicht ähnlich sind (-> Trennung). Andererseits können sie bei Ähnlichkeit aber auch zusammenhängen (-> neue Regionenmittelwerte), welches bei Zusammenfassen aber nicht bemerkt wird. Das "bestFit + Merge"-Splitting behebt diese Fehler elegant während des Trennungsvorgangs, da im Datenbaum die Fehlstellen erreicht werden. (Nicht während der Zusammenfassung, die ja in der Inselstruktur arbeitet).

Das "bestFit + Merge"-Splitting arbeitet wie folgt. Grundsätzlich werden die Ebenen von der zweit-höchsten bis zur niedrigsten Ebene betrachtet: Beginnend mit der zweithöchsten Ebene werden alle dort vorhandenen Regionen sequentiell abgearbeitet. Für jede Region werden die Segmenteigenschaften (Segmentnummer + Segmentmittelwert) des Vaters an sie vererbt (also überschrieben; von der höheren Ebene auf die niedrigere propagiert). Bei zwei unterschiedlichen Vätern geschieht folgendes: Sind die Väter unähnlich, so werden die Segmenteigenschaften des ähnlicheren Vaters an die Region vererbt (bestFit-Split). Sind die Väter ähnlich, so werden sie zu einem Vater zusammengefasst (neue Segmentnummer + Grauwert + sonstige Eigenschaften) und seine neuen Eigenschaften an die Region vererbt (Merge). Weiterhin werden alle bisher propagierten Segmenteigenschaften anderer Regionen der betrachteten Ebene überprüft, ob sie denen eines der gerade verschmolzenen Väter entsprechen (insbesondere der Segmentnummer) und werden auch durch die neuen Eigenschaften ersetzt. Des weiteren werden alle Verbindungen nachfolgend betrachteter Regionen der Ebene zu den verschmolzenen Vätern (d.h. zu den nicht mehr existierenden Segmentnummern) ebenso aktualisiert.

Ist eine Ebene vollständig abgearbeitet worden, so wird mit der nächst tieferen Ebenen ebenso verfahren, wobei die natürlich die propagierten Werte auf die niedrigere Ebenen weiter herunterpropagiert werden. Das Verfahren ist beendet, wenn die Propagation auf die niedrigste Ebene abgeschlossen ist.

Bei diesem zweiten Trennungsverfahren wird die zuvor erhaltene Datenbasis zerstört, also die Daten, aus denen das Endergebnis gewonnen wird. Dies ist allerdings regelmäßig nicht mehr von Interesse, wenn die gewünschte Bildinformation vorliegt. Daher spielt dieser "Nachteil" in der Praxis regelmäßig keine Rolle.

Es stehen schließlich Information über homogene Bereiche innerhalb und angrenzend an die Fügeverbindung zur Verfügung. Es wird nun vorzugsweise automatisiert festgestellt, welcher homogene Bereich wie zu bewerten ist, ob es sich also um eine ordnungsgemäße Fügeverbindung handelt oder um einen fehlerhaften Bereich innerhalb der Fügeverbindung. Um fehlerhafte Bereiche automatisiert aufzufinden, werden beispielsweise in an für sich bekannter Weise folgende Verfahren eingesetzt: Kantendetektionsverfahren, Schwellwertverfahren, verschiedene Klassifikationsverfahren wie k-Nearest-Neighbourhood-Verfahren oder Clusteralyse, Bayes-Klassifikationen etc.. Es können noch spezielle Anpassungen bzw. Eingrenzungen durchgeführt werden, um nicht ein gesamtes berechnetes Ergebnis weiter auszuwerten, sondern sich auf die Ausschnitte zu beschränken, die die Fügeverbindung betreffen.

In einem Ausführungsbeispiel wurde ein rohrförmiges Aluminiumstück mit einem rohrförmigen Stahlstück miteinander verschweißt. Es wurde dann eine einfache Klassifizierung nach Grauwert und Segmentgröße durchgeführt und so ermittelt, was als "Fehler" innerhalb der Fügeverbindung zu bewerten ist. Die Auswahl, welcher Bereich Schweißnaht ist, erfolgte nach dem Kantendetektionsverfahren. Empirisch wurde zuvor der Grauwert ermittelt, welcher auf einen Fehler hindeutet und welcher nicht. So lässt sich einfach und schnell automatisiert feststellen, welcher Bereich fehlerhaft ist und welcher nicht.

Zur Durchführung des Verfahrens wird eine Vorrichtung bereitgestellt, die Mittel zum Verbinden von zwei Werkstücken sowie eine Mikrofokus - Röntgenanlage umfasst. Die Mikrofokus - Röntgenanlage ist so angeordnet, dass diese den Fügebereich sowie einen angrenzenden bereits fertig gestellten Bereich-der Fügeverbindung einer noch nicht vollständig hergestellten Fügeverbindung zu durchstrahlen vermag. Weiter umfasst die Vorrichtung einen Detektor für die Erfassung dieser Röntgenstrahlung, die also den Fügebereich sowie die Fügeverbindung während des Zusammenfügens von zwei Werkstücken durchstrahlt. Diese Vorrichtung ist also so beschaffen, dass zeitgleich zusammengefügt und bereits zusammengefügte Bereiche sowie der Fügebereich durchstrahlt werden können. Die Vorrichtung umfasst weiter eine elektronische Auswerteinheit. Die elektronische Auswerteeinheit ist so beschaffen, dass mit ihr Fehler innerhalb der Fügeverbindung in Echtzeit, also noch während des Zusammenfügens und unmittelbar danach ermittelt werden können. Die Vorrichtung umfasst eine Mikrofokus - Röntgenanlage, da diese einen sehr kleinen Brennfleck aufweist. Auf diese Weise sind sehr scharfe Abbildungen auf dem Detektor möglich, was für ein genaues Ergebnis wichtig ist. Der Fügebereich ist der Bereich zwischen zwei Werkstücken, der zusammengefügt, also beispielsweise geschweißt wird.

Unter einer Mikrofokus - Röntgenanlage wird eine solche verstanden, deren Brennfleck im Mikrometerbereich liegt oder kleiner. Konventionelle Anlagen verfügen über einen Brennfleck im Millimeterbereich.

Vorzugsweise sind Mikrofokus - Röntgenanlage und Detektor so angeordnet, dass der durchstrahlte Bereich vergrößert auf dem Detektor auftrifft und zwar vorzugsweise um wenigstens einen Faktor 10, um so zu einem genauen Ergebnis zu gelangen.

Die Röntgenbilder werden erfasst und digital gemäß dem beanspruchten Verfahren weiter verarbeitet. Es wird vorzugsweise ein sogenannter Flatpanel - Detektor eingesetzt, um großflächig die Röntgenstrahlen erfassen zu können. Der Detektor ist insbesondere so beschaffen, dass er wenigsten 8 Bilder pro Sekunde zu erfassen vermag, um so zuverlässig in Echtzeit eine Fügeverbindung überprüfen zu können. Besonders bevorzugt wird daher eine solche Vorrichtung, die wenigstens 200 Bildern/Sekunde erfassen und verarbeiten kann, um so weiter verbessert eine Echtzeitkontrolle durchführen zu können.

Die Werkstücke werden im Strahlengang der Röntgenstrahlen angeordnet. Die beispielsweise zu verschweißenden Gegenstände werden in einem Manipulationsroboter eingespannt. Der Manipulationsroboter kann den Gegenstand geeignet verfahren oder drehen, um die beiden Werkstücke vollständig miteinander verbinden zu können. Alternativ werden nicht die Werkstücke, sondern die Schweißquelle wie Plasmabrenner, Laserlicht- oder Ultraschallquelle verfahren. Allerdings ist im vorliegenden Fall zu bevorzugen, dass die beiden Werkstücke verfahren werden, um nicht zusätzlich ggf. die Röntgenquelle nebst Detektor ebenfalls bewegen zu müssen.

Vorzugsweise wird ein Laserstrahl über eine Glasfaser eingekoppelt, um im Zentrum des Zusammenfügens den Platzbedarf zu minimieren.
Das Zusammenfügen bzw. Verbinden kann auch beispielsweise per Reibschweißen erfolgen.

Zunächst einmal wird im Fall eines Laser dieser so ausgerichtet, dass er weder auf den Detektor noch auf die Mikrofokusanlage treffen kann. Andernfalls können diese beschädigt werden.

Weiter wird in einer Ausführungsform die Mikrofokusanlage sowie der Detektor vor Partikeln oder Funken geschützt, die während des Zusammenfügens entstehen, so zum Beispiel beim Schweißen. Dies geschieht in einem Ausführungsbeispiel beispielsweise durch Aluminiumplatten. Die Aluminiumplatten sind vorzugsweise sehr dünn und sind maximal wenige Millimeter dick. Die Aluminiumplatten werden wenigstens vor die jeweiligen Geräte also vor die Röntgenanlage und den Detektor platziert. Aluminium lässt Röntgenstrahlen hindurch, nicht aber die Funken vom Schweißen. Auf diese Weise ist der störungsfreie Betrieb gewährleistet.

Bevorzugt werden Mittel vor Röntgenstrahlung geschützt, die für das Verbinden eingesetzt werden. Dies geschieht durch abschirmende Materialien wie Blei, Wolfram oder abgereichertes Uran. Beispielsweise die Elektronik eines Lasers wird durch einen Bleimantel oder einen Mantel aus einem anderen abschirmenden Material vor der Röntgenstrahlung geschützt. Auf diese Weise ist der störungsfreie Betrieb weiter verbessert gewährleistet.

Zunächst wird zur Durchführung des Verfahrens vorzugsweise die Röntgenröhre zuerst eingeschaltet, so dass ein Bild empfangen wird. Anschließend wird das Zusammenfügen gestartet, also zum Beispiel ein auf die Schweißstelle gerichteter Laser und die Probe geeignet bewegt, so dass der Laser die herzustellende Schweißnaht entlang geführt wird. Über beispielsweise ein Computerprogramm wird im gleichen Moment, wenn das Zusammenfügen startet, mit der Bildaufnahme und Bildverarbeitung begonnen. Mit beispielsweise dem Abschalten des Lasers am Ende eines Schweißprozesses endet die Auswertung.

In einer Ausführungsform umfasst die Vorrichtung Mittel, um einen festgestellten Fehler innerhalb der Fügeverbindung noch im gleichen Arbeitsschritt beheben oder das Zusammenfügen korrigieren zu können.

Es kann sich beispielsweise um Mittel handeln, mit denen eine Bewegung zwischen beispielsweise einem Laserstrahl oder einem Plasmabrenner, die für das Verbinden verwendet wird, und der zu verbindenden Naht, neu justiert wird, falls während der Online-Detektion festgestellt wird, dass der Laserstrahl oder der Brenner aus der Naht herausläuft.

In einer weiteren Ausführungsform enthält die Vorrichtung Mittel, die eine detektierte fehlerhafte Stelle innerhalb der Fügeverbindung markieren. Das Rechnerprogramm speichert beispielsweise ab, an welcher Stelle sich der Fehler befunden hat. In einer Ausgestaltung der Erfindung ist die Vorrichtung so beschaffen, dass im Anschluss an eine detektierte fehlerhafte Stelle beispielsweise der Manipulator zurückfährt und noch einmal die fehlerhafte Stelle geschweißt wird.

In einer weiteren Ausgestaltung der Erfindung befindet sich beispielsweise bei einer Bandschweißanlage im Anschluss daran eine Schneidanlage. Diese ist so gekoppelt, dass sie die fehlerhafte detektierte Schweißstelle sofort herausschneiden kann. Die Information darüber, wo sich die fehlerhafte Stelle befindet, kann durch Computer an die Schneidanlage übermittelt werden. So können automatisiert fehlerhafte Schweißstellen sofort entfernt werden.

In einer weiteren Ausgestaltung des Verfahrens wird die Energie eines Lasers, eines Ultraschalls oder eines Plasmabrenners in Abhängigkeit vom Detektionsergebnis gesteuert. Wird also festgestellt, dass die Fügeverbindung unzureichend ist, so wird über Steuerung der Laserenergie, des Plasmabrenners oder des Ultraschalls versucht, diesen Fehler auszugleichen, um beispielsweise bei einer Bandschweißanlage im Anschluss an einen aufgetretenen Fehler zuverlässig wieder korrekt verbinden zu können.

In einer anderen Ausgestaltung werden die diversen Parameter verändert und so in Echtzeit festgestellt, wie optimal verbunden werden kann. Mit diesen eingestellten Parametern wird dann das Zusammenfügen durchgeführt.

Durch die Erfindung kann zum einen die Qualitätskontrolle beschleunigt werden. Zum anderen kann ein Fehler noch während des Zusammenfügens behoben werden. Beispielsweise Schweißparameter können noch während des Schweißens nachgeregelt werden, wenn sich herausstellt, dass das Schweißergebnis schlechter wird. So kann das Auftreten von nicht akzeptablen Fehlern von vornherein vermieden werden. Beim Stand der Technik wird eine solche Qualitätskontrolle in der Regel nur stichprobenhaft durchgeführt. Im vorliegenden Fall kann durch das Onlineverfahren letzten Endes jede Fügeverbindung kontrolliert werden. Entsprechend geringer wird die Fehlerquote.

Im Vergleich zur Filmtechnik kann im vorliegenden Fall die Aufnahmeposition für die Qualitätskontrolle optimal eingestellt werden. Es wird also ein optimaler Einstrahlwinkel der Röntgenstrahlung eingestellt, um Fehler feststellen zu können.

In einer Ausgestaltung des Verfahrens wird direkt entschieden, ob ein Bauteil ordnungsgemäß geschweißt wurde oder nicht. In Abhängigkeit davon wird Ausschuss sofort aussortiert, falls beispielsweise selbst durch Korrekturen kein ordnungsgemäßes Bauteil hergestellt werden konnte.

Zur Durchführung des erfindungsgemäßen Verfahrens ist darauf zu achten, dass eine Vorrichtung eingesetzt wird, mit der die anfallende Datenmenge schnell genug verarbeitet werden kann. Konventionelle Rechner sind dazu regelmäßig nicht in der Lage.

Das Bildgebungsverfahren beinhaltet eine Vielzahl von Rechenschritten, die parallel verarbeitet werden können. Beispielsweise die Auswertung von Regionen kann zeitgleich, also parallel verarbeitet werden. Dies erlaubt es, eine Hardware bereitzustellen, die auf parallele Verarbeitung speziälisiert ist und so schnell genug die erhaltenen Daten auswerten kann, um ein Onlinedetektionsverfahren durchführen zu können.

In einer Ausführungsform der Erfindung wird daher bevorzugt eine Hardware bereitgestellt, die die parallele Auswertung der erhaltenen Daten erlaubt.

In einer vorteilhaften Ausführungsform wird daher ein FPGA basiertes Coprozessormodul verwendet. FPGA ist die Abkürzung für Field Programmable Gate Array. Nach der Erfindung wird im Vergleich zu konventionellen FPGA-Modulen die Anordnung der Speicherelemente abgeändert. Zum einen sind solche Speicherelemente parallel angeordnet, die für einen zufälligen Zugriff auf Daten optimiert sind. Beispielsweise handelt es sich dabei um SRAM-Speicherelemente. Zum anderen sind parallel angeordnete Speicherelemente, die auf den Durchsatz von großen Datenmengen optimiert sind, beispielsweise SDRAM-Speicherelemente, vorgesehen. Diese Anordnung ist optimiert in Bezug auf die Menge der zu verarbeitenden Daten. Es können große Mengen an Daten gleichzeitig abgespeichert oder ausgelesen werden. Diese Hardware stellt verbessert sicher, dass online die gewünschte Information über Fehler erhalten werden kann.

Problematisch an einer solchen Anordnung ist einerseits die hohe Leistungsaufnahme und andererseits der Vielzahl der Leitungen vom FPGA zu den Speicherelementen hin. Diese Leitungen sind idealerweise gleich lang, um aufgrund der Hochfrequenz, mit der gearbeitet wird, Ergebnisse sicher erhalten zu können.

Um die gewünschte Speicheranordnung mit gleich langen Leitungen umsetzen zu können, ist ein Board erforderlich, welches wenigstens über 14 Ebenen verfügt. Würde man die Zuleitungen für die SPeichelemente nur in einer Ebene anordnen, so müssten diese annähernd sternförmig und kreuzungsfrei um das FPGA herum angeordnet sein. Dies ist aufgrund der Vielzahl an benötigte ähnlich langen Leitungen (578 Leitungen) fertigungstechnisch nicht möglich. Die Möglichkeit, über mehrere Ebenen die Speicherbausteinzuleitungen zu realisieren, eröffnet die Möglichkeit, ähnliche hochfrequenztechnische Zuleitungseigenschaften zu generieren. Die Möglichkeit, über mehrere Ebenen die Speicherbausteine verteilt anzuordnen, eröffnet die Möglichkeit, mit graden Zuleitungen insgesamt die gleiche Länge bereitzustellen.

Zusätzlich werden sogenannte Cores benötigt. Es handelt sich hierbei um hardwaremäßige Treiber, die das FPGA in die Lage versetzen, die Speicherelemente anzusteuern. Ferner wird dadurch zusätzliche Peripherie wie z. B. ein PCI Bus angesteuert.

Eine solche Karte mit dem FPGA wird in einem entsprechenden Slot im Rechner gesteckt. Der Rechner wird mit entsprechender Software versehen. So steht eine Vorrichtung bereit, die in der Lage ist, die eingehenden Informationen parallel abzuarbeiten und so große Datenmengen schnell genug auf einmal abzuarbeiten, um zum gewünschten Ergebnis zu gelangen.

Die Hardwareimplementierung des Algorithmus entscheidet darüber, wie die Daten auf die Speicherelemente verteilt werden. Handelt es sich um Daten, die lediglich zur Wiederverwendung im Rahmen eines Algorithmus vorgesehen sind, so werden diese im SRAM gespeichert. Ansonsten werden die Endergebnisse in den SDRAM-Speicherbausteinen gespeichert.

Die SDRAM-Module sind in der Lage, große Datenmengen im sogenannten Burstmodus abzuarbeiten. Die Speicherkapazität der SDRAM-Module ist groß ausgelegt im Vergleich zu den SRAM-Modulen, da große Bilddatenmengen schließlich abgespeichert werden müssen.

Die SRAM-Module sind sehr viel kleiner, da diese nur den Zugriff. auf einzelne Daten erlauben müssen. Abgesehen davon gibt es keine SRAM-Speicherelemente mit großen Speicherkapazitäten. Entscheidend ist jedoch, dass keine großen SRAM-Speicherkapazitäten für die Durchführung des Verfahrens benötigt werden.

In einem Ausführungsbeispiel beträgt die Kapazität pro SDRAM-Speicherelement beispielsweise 1 GByte. Die Speicherkapazität pro SRAM-Speicherlelement beträgt ca. 4 MByte.

Zur 2D/3D-Segmentierung in Echtzeit (Latenzzeiten < 1 sec) des in [Vog02] angegebenen Algorithmus ist eine Hardwarebeschleunigung in Form einer flexiblen FPGA-Karte vorgesehen. Da der Algorithmus viel Speicher braucht (ein 4096² Grauwertbild mit 16 bpp benötigt 32 MByte für das Ursprungsbild und ca. 128 MByte für die Inselstruktur; ein 512³ Grauwertbild mit 12 bpp benötigt 192 MByte für das Ursprungsvolumen und ca. 1 1 20 MByte für eine ausreichende Inselstruktur [DLV03]), ist die FPGA-Karte mit entsprechendem Speicher ausgestattet. Für die Zwischenschritte des Algorithmus (Bearbeitung einer Inselebene bzw. Regioneebne) ist zusätzlicher Zwischenspeicher (z.B. für Überlappungsinformationen) vorhanden, auf den wahlfrei zugegriffen werden kann.

Da die Karte in gängigen PC Systemen zum Einsatz kommen soll, entspricht sie in einem Ausführungsbeispiel dem PCI Standard (min. PCI Rev. 2.2). Zumindest soll die Karte mit einer Auswahl von handelsüblichen Mainboards sowohl mit 32 Bit (33 MHz) als auch mit 64 Bit (66 MHz) betreibbar sein.

Es wird als FPGA z. B. der Typ Xilinx Virtex II PRO XC2VP100-6FF1704 verwendet. Dieser Typ ist mit dem nächst kleineren Typ XC2VP70-6FF1704 pinkompatibel, wenn die nicht angeschlossenen Pins des XC2VP70 im XC2VP100 nicht verwendet werden.

Direkt verbunden mit dem FPGA sind vier separate Speicherbänke (Channel), wobei zwei davon als DDR-SDRAM und die anderen beiden als SRAM ausgelegt sind. Die Wortbreite für das DDR-SDRAM soll 64 Bit und für das SRAM 128 Bit betragen. Da das DDR-SDRAM mit doppelter Datenrate arbeitet, wird es FPGA-intern mit 128 Bit angesprochen. Die Taktfrequenz aller Bänke soll bei der derzeit theoretischen Grenze von 110 MHz (8.5 ns) liegen (das DDR-SDRAM entsprechend mit 220 MHz). Die DDR-SDRAM Bänke sollen als DIMM Sockets ausgelegt sein und Module von min. 1024 MByte (DDR266, PC2100) unterstützen. Die SRAM Bänke (ZBT) können als einzelne Chips aufgelötet werden und müssen eine min. Kapazität von 8 MByte pro Bank aufweisen.

Die Kommunikation mit dem 64 Bit / 66 MHz PCI Bus wird von einem externen PLX Chip übernommen. Die Steuerung des PLX Chip wird vom oben genannten Virtex II FPGA (Anwendungs-FPGA) übernommen.

Das CameraLink Interface wird direkt an das Anwendungs-FPGA angebunden.

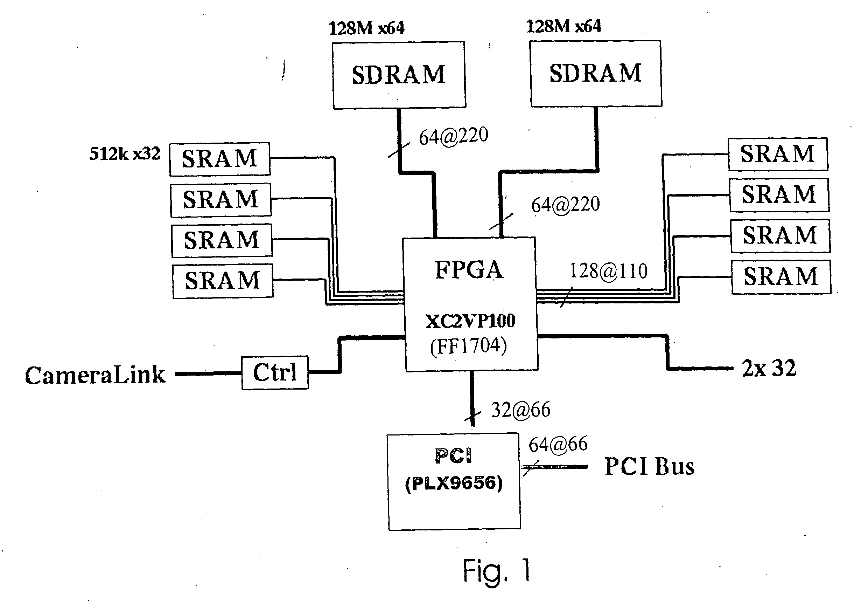

Figur 1 zeigt Blockschaltbild dieser Karte mit FPGA. Das Blockschaltbild gibt nochmals detailliert den Aufbau der FPGA-Karte wieder. Hier wurde angenommen, dass die SRAM Bänke aus jeweils vier einzelnen Chips mit je 32(36) Bit Wortbreite aufgebaut werden müssen, um die Datenbreite von 1 28 Bit zu realisieren.

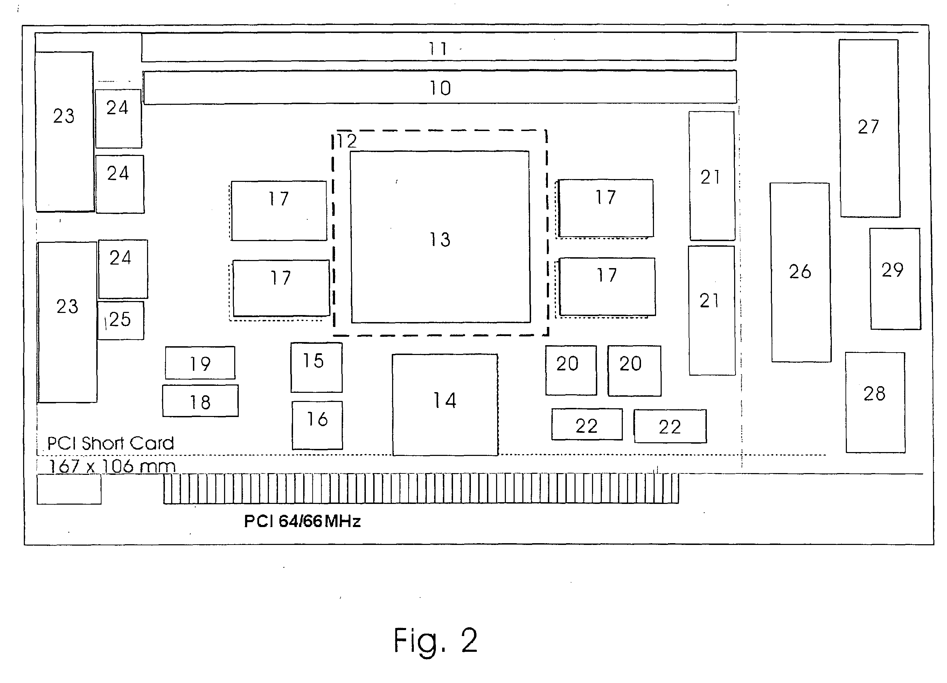

Figur 2 zeigt ein Beispiel zur Vorplazierung (Bestückungsseite). Die ZBT-RAMs sind auf der Vor- und Rückseite bestückt. Der PLX Chip sollte sich in der Nähe des PCI Interfaces befinden, das Anwendungs-FPGA in der Nähe des PLX Chips. Die restlichen Bausteine, vor allem die DDR-SDRAM Sockel und die SRAM Chips, sind derart zu platzieren, dass kurze und möglichst parallele Signalwege vorliegen, um deren jeweils maximale Übertragungsrate zu ermöglichen.

Die Personalisierung des FPGAs sollte möglichst über den PCI Bus erfolgen.

Das CameraLink Interface soll als "Medium" Interface bestehend aus 2 Channels und mit 2 MDR 26 Pin Steckern realisiert werden. Die maximale Taktfrequenz die von der Kamera "Piranha2 P2-2x" übertragen wird beträgt 40 MHz und ist damit eine Minimalanforderung.

Die von dem LVDS-Receiver seriell empfangenen seriellen Daten sollen parallel und direkt an das Anwendungs-FPGA weitergeleitet werden. Die 2 Output-Clocks der 2 Receiver sind zueinander synchron, aber mit unbestimmter Phasenlage. Sie werden in das FPGA geführt, um damit die Datensignale einzusynchronisieren.

Es ist ein PCI-Interface für einen 64 Bit / 66 MHz PCI Bus und 3,3V Motherboards zu erstellen.

Die Verbindung PCI-Stecker zum FPGA wird von einem externen Chip (Fa. PLX , PCI 9656) übernommen. Dieses wird mit einem seriellen EEPROM verbunden, um Konfigurations-Informationen abzuspeichern, die beim Booten geladen werden.

Das PLX Chip soll auch vom Anwendungs-FPGA gesteuert werden können. Das FPGA soll als Master und Slave am Local-Bus des PLX Chips wirken können.

Folgende Local-Bus Signale des PLX-Chips werden nicht angeschlossen: DP[3:0], LBE_N[3:0] (Pulldown)

Die 3,3V Spannungsversorgung am PCI-Stecker wird zur Versorgung des PLX-Chips und dessen EEPROM verwendet.

Das Anwender-FPGA übernimmt die Arbitrierung des Local-Bus zwischen PLX-Chip und FPGA. Dazu übernimmt das FPGA folgende Aufgaben:
- Überwachung des PLX-Ausgangssignals LHOLD, mit anschließender Freigabe des Local-Buses (LHOLDA = '1')
- Überwachung des PLX-Ausgangssignals BREQo, mit anschließender Freigabe des Local-Buses (LHOLDA = '1')
- Überwachung des PLX-Ausgangssignals LINTo#, mit anschließender Bearbeitung des Interrupts.
- Ausgabe des Signals LINTi bei Interrupts durch das Anwender-FPGA

Es sollen 2 Bänke mit min. je 1 GByte und der Organisation 16M x 64 Bit zur Verfügung stehen, die direkt an das Anwendungs-FPGA angeschlossen sind.

Alle Kontroll- und Adressleitungen einer Bank sind nur gemeinsam steuerbar. Die Taktfrequenz der Bänke soll min. 1 10 MHz (8.5 ns) und die Datenrate 220 MHz betragen. Die DDR-SDRAM Bänke sollen als DIMM Sockets ausgelegt sein und Module von min. 1024 MByte (DDR266, PC2100) unterstützen. Die Parity-Bits CB[7:0] brauchen nicht angeschlossen zu werden.

Es sollen 2 Bänke mit je 8 MByte und der Organisation 51 2k x 128Bit zur Verfügung stehen, die direkt an das Anwendungs-FPGA angeschlossen sind. Alle Kontroll- und Adressleitungen einer Bank sind nur gemeinsam steuerbar. Es sind auch SRAM Typen mit Pipelining erlaubt.
Die Taktfrequenz der Bänke soll bei min. 1 10 MHz (8.5 ns) liegen. Die SRAM Bänke (ZBT) können als einzelne Chips aufgelötet werden.
Die Parity-Bits brauchen nicht angeschlossen zu werden.

Es soll das Xilinx FPGA XC2VP100 im FF1704 Gehäuse verwendet werden.

Für jede der beiden DDR SDRAM Bänke soll im Anwendungs-FPGA ein eigenständiger DDR-RAM Core vorhanden sein, um die unabhängige Betriebsweise der zwei Speicher zu gewährleisten. Der Core sollte mindestens mit der Sample-Rate des Speichers (min. 220 MHz) arbeiten und dem Anwender ein einfach zu bedienendes 64 Bit Interface in VHDL zur Verfügung stellen. Ein vom Core unabhängiges (VHDL-)Modul multiplext die Daten und gibt seinerseits eine Schnittstelle mit 128 Bit und halber Taktfrequenz (110 MHz) aus. Der im Anwendungs-FPGA ablaufende Algorithmus wird die Besonderheiten von DDR Speicher berücksichtigen und möglichst zusammenhängende Speicherbereiche auslesen bzw. schreiben. Zu deren Zwischenspeicherung bei wahlfreiem Zugriff ist das ZBT RAM vorgesehen.

Der PCI-I/O Accellerator von PLX verbindet das Anwender-FPGA mit dem PCI Bus. Das FPGA ist externer Local Bus Arbiter im Sinne der PLX Spezifikation. Es sind 2 Konfigurations-PROMs vorzusehen.

PROM1 kann nur über einen JTAG-Stecker programmiert werden und enthält ein vorgegebene Version einer sicher funktionierenden Schaltung. Über diesen JTAG-Stecker soll auch das FPGA direkt programmiert werden können. Beim Power-On wird nur von PROM1 konfiguriert.

PROM2 wird über Signal-Pins des FPGAs programmiert (Nicht über das FPGA-JTAG Port!). Die Programmierung soll über das PCI-Interface möglich sein. Das PROM2 wird an einen eigenen JTAG-Stecker angeschlossen, damit es im Testfall programmiert und gelesen werden kann.

Über das PLX-Chip und über ein steuerndes CPLD kann die Rekonfiguration des FPGAs auch softwaremäßig gesteuert werden. Dazu wird das PLX Signal USERo verwendet.

Das Signal USERo erzeugt einen Impuls von ca. 10 Takten Länge ( aus LCLK_66M, 66MHz). Die Länge der '1' soll so kurz sein, dass zwar das FPGA in den INIT Mode geht, aber die Konfiguration aus dem PROM noch nicht gestartet haben kann. Das die Konfiguration steuernde CPLD nimmt den Impuls auf und führt die Konfiguration durch.

Das Signal USERo erzeugt eine Flanke von '0' nach '1'. Der Pegel '1' muss solange gehalten werden, bis das FPGA konfiguriert worden ist. Hierzu ist ein (noch zu definierendes) Registerbit im FPGA auszulesen.
Alternative: Das PLX-Signal USERi wird an DONE des FPGAs angeschlossen und wird über das PCI-Interface ausgelesen.

Sollte im Fehlerfall, die Programmierung über PCI und das Anwender-FPGA in das PROM2 nicht funktionieren, ist damit der Pfad PCI -> PROM2 abgeschnitten. Dann muss über Power-On oder alternativ softwaremäßig über PCI und USERo (mit kurzem Impuls) die Ur-Konfiguration geladen werden.

Für die Überlegungen zu gleichzeitig schaltenden Ausgängen (SSO) ist der genaue Datenfluß zwischen PCI / DDR-SDRAM DIMMs / ZBT SDRAMs ausschlaggebend.

Der Idealfall aus Sicht des Algorithmenentwicklers sieht folgendermaßen aus: Das gesamte Bild wird in einem Zug über den PCI Bus in eine DDR Bank geladen. Dann werden zwei (Bild)Zeilen ausgelesen und in eine ZBT Bank gespeichert. Dort wird zwischen den zwei Zeilen beliebig hin und her gesprungen (Zig-Zag Lesen) und eine Ergebniszeile in die zweite ZBT Bank geschrieben (linear).

Klar ist, dass auch hier ein bis zwei Zeilen in die zweite DDR Bank weggeschrieben werden. Idealerweise werden die nächsten neuen (Bild)Zeilen aus der ersten DDR Bank in die erste ZBT Bank geschrieben. Wie lang die Latenzzeiten zwischen den Lesezyklen sind, ist noch nicht bekannt. Es wird aber versucht, diese so kurz wie möglich zu halten. Parameter (Threshold) werden nach der Übertragung des Bildes gesetzt und als Trigger interpretiert, die die Verarbeitung startet. Während der Verarbeitung kann die SW nur warten. Per Flag oder Interrupt wird das Ende der Verarbeitung signalisiert und das Ergebnisbild kann teilweise oder ganz ausgelesen werden.

Die Dimensionen des Bildes sollen im 2D bei 4096 x 4096 und 16 Bits/Pixel liegen.

### Es werden folgende Annahmen getroffen:

Die SSO-Bedingungen sind im Wesentlichen vom Ablauf des Schreibens/Lesens in die DIMMs und ZBT-RAMS abhängig.
1. Schreiben über PCI in DIMM A
2. Starten des Algorithmus
3. Lesen von DIMM A, Schreiben in ZBT A
4. Lesen/ Schreiben wahlfrei von und in ZBT A und ZBT B
5. Lesen ZBT A oder B und Schreiben in DIMM B
6. Lesen über PCI aus DIMM B
7. Schreiben über PCI in DIMM A und Neustart des Algorithmuses

### Literaturverzeichnis:

Fehler! Es wurden keine Einträge für das Inhaltsverzeichnis gefunden.
XV03: Xilinx Virtex II Platform FPGA Documentation, DS031, www.xilinx.com, 2003
XL03: Xilinx LogicCore Product Specification, "RapidlO 8-bit Port Physical Layer Interface", DS243, www.xilinx.com, 2003
PLX02: PLX Technology, Inc., "PCI 9656: 64-bit, 66 MHz PCI Bus Mastering I/O Accelerator for Motorola PowerQUICC & Generic 32-bit, 66 MHz Local Bus Designs", www.plxtech.com, 2002

### Referenzdokumente

RD1: PCI 9656BA Data Book, Version 1.1, 10/2003, PDF-Datei " PCI 9656BA_Data_Book_V1.1.pdf",(siehe auch http://www.plxtech.com)

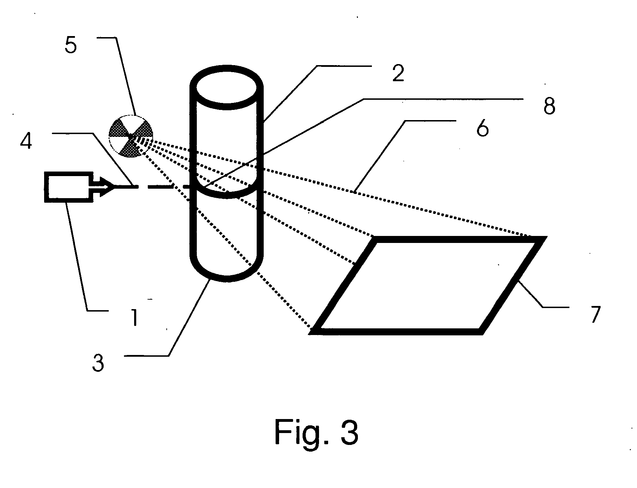

Die Figur 3 verdeutlicht den mechanischen Aufbau sowie die Anordnung zur Erzielung einer Vergrößerung.

Figur 3 zeigt schematisch eine Laserquelle 1 und zwei rohrförmige, metallische Werkstücke 2 und 3, die miteinander durch einen Laserstrahl 4 verschweißt werden. Mit einer Mikrofokus - Röntgenanlage 5 werden Röntgenstrahlen 6 erzeugt, die sowohl den Bereich, der durch den Laserstrahl 4 verschweißt wird, also den Fügebereich, als auch bereits zuvor zusammengefügte Bereiche durchstrahlen. Da die Röntgenquelle 5 sich näher bei der Fügeverbindung der Werkstücken 2 und 3 befindet als der Flatpanel - Detektor 7, erfasst der Detektor eine vergrößerte Abbildung. Durch einen nicht dargestellten Manipulator werden die beiden Werkstücke gedreht, so dass der Laserstrahl 4 die Naht 8 entlang geführt wird.

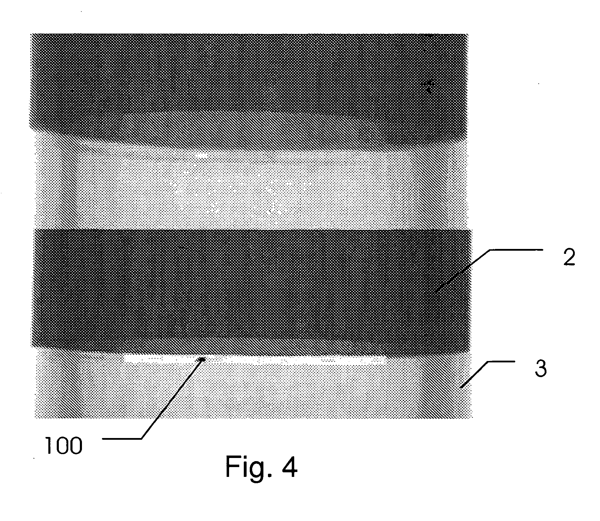

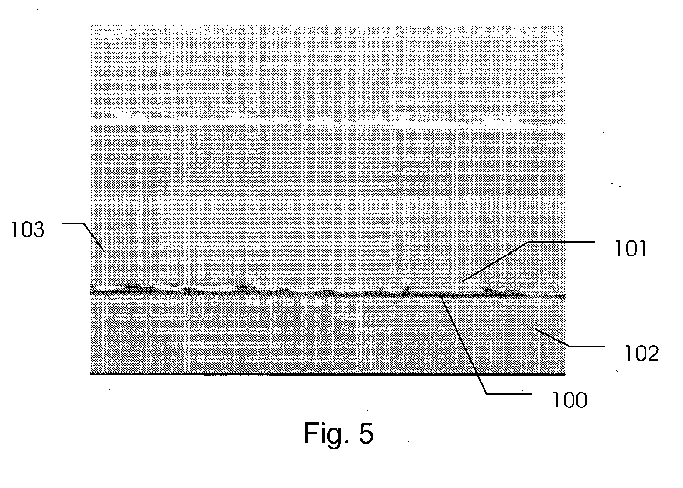

Die Figuren 4 und 5 zeigen Beispiele von Aufnahmen, die in Echtzeit von Schweißnähten zwischen zwei verschiedenen Metallen mittels Laser erhalten wurden. Es konnte sogar der Prozess der Verfestigung noch mitverfolgt werden. Es wurde beobachtet, wie sich die fehlerhaften Bereiche 100 durch die Verfestigung veränderten, die dunkel dargestellt sind. Ordnungsgemäße Bereiche 101 der Fügeverbindung zwischen zwei Werkstücken 102 und 103 erscheinen hell in der Figur 5.

### Bezugszeichenliste zu Fig. 2

| | |
|---|---|
| 10 | DIMM 1 (185 Pins) 2,5V, 141 x 7,5 mm |
| 11 | DIMM 2 (185 Pins), 141 x 7,5 mm |
| 12 | Kühler 51 x 51 |
| 13 | XC2VP100-6, FF1704C, BGA 1 mm Spacing, 42,5x42,4 mm, 3,3 V /2,5 V / 1,5 V / 1,25 V |
| 14 | PLX, PCI 9656, 3,3 V / 2,5 V / (5 V) |
| 15 | Clock |
| 16 | EE-PROM |
| 17 | ZBT RAM, CY7C1370C, BG119 (Doppelseitig bestückte ZBT RAMs) |
| 18 | Test-LEDs |
| 19 | Test-Jumper |
| 20 | PROM, XCF32P, 1 ,8 V |
| 21 | Mictor Test-Connector, 38 Pins |
| 22 | JTAG Stecker |
| 23 | CameraLink Connector, 14 x 40 mm, Thru Hole |
| 24 | Cam Link (National S. DS90CR286) |
| 25 | LVDS |
| 26 | Spannungsversorgung 2,5 V |
| 27 | Spannungsversorgung 1,5 V |
| 28 | Spannungsversorgung 3,3 V |
| 29 | 5V Stecker |

## Patentansprüche

1. Verfahren zur Kontrolle einer Fügeverbindung (8), bei der zwei Werkstücken (2, 3) miteinander verbunden werden und während des Verbindens bereits verbundene Bereiche der zwei Werkstücke (2, 3) mit einer Röntgenstrahlung (6) sowie vorzugsweise auch der Fügebereich durchstrahlt werden und die Röntgenstrahlung (6) erfasst und so ausgewertet wird, dass fehlerhafte Stellen von bereits verbundenen Bereichen ermittelt werden,
bei dem die Röntgenstrahlung (6) in Form von Grauwerten ortsabhängig erfasst wird, wobei solche benachbart liegenden Grauwerte zusammengefasst werden, deren Grauwertabstand unterhalb eines vorgegebenen Schwellwertes llegen und die zusammengefassten Regionen so weiter ausgewertet werden, dass innerhalb der Fügeverbindung aufgetretene Fehler ermittelt werden, **dadurch gekennzeichnet dass**
im Anschluss an das Zusammenfassen überlappende Bereiche von Regionen getrennt und nur einer Region zugeordnet werden, und zwar indem eine oder mehrere Regionen einer unteren Ebene, die zu einem Überlappungsbereich von Regionen der höchsten Ebene gehören, nur noch der Region der höchsten Ebene zugeordnet werden, zu der der Grauwertabstand am geringsten ist,
bei dem empirisch festgestellt wird, welchen Grauwert bzw. weichen Grauwertbereich ein fehlerhafter Bereich Innerhalb einer Fügeverbindung aufweist und anhand dieser Information automatisiert ermittelt wird, welche Bereiche innerhalb einer Fügeverbindung fehlerhaft sind.

2. Verfahren nach Anspruch 1 , bei dem Röntgenstrahlung in Form von Grauwerten ortsabhängig erfasst wird, ein ortsabhängig erfasster Grauwert mit benachbarten Grauwerten zu einer Region der Ebene 1 zusammengefasst werden, wenn die zugehörigen Grauwertabstände unterhalb eines vorgegebenen Schwellwertes liegen, auf diese Weise auch die weiteren ortsabhängig erfassten Grauwerte zu Regionen der Ebene 1 zusammengefasst werden, eine jede gebildete Region der Ebene 1 einen Grauwert erhält, der durch Mittelung der Grauwerte erhalten wurde, aus denen die Region der Ebene 1 gebildet wurde, die Regionen der Ebene 1 in analoger Weise zu Regionen der Ebene 2 zusammengefasst werden, in dieser Weise weiter Regionen einer unteren Ebene zu Regionen einer darüber liegenden Ebene zusammengefasst werden und schließlich die zusammengefassten Regionen der höchsten erreichten Ebene so weiter ausgewertet werden, dass innerhalb der Fügeverbindung aufgetretene Fehler ermittelt werden.

3. Verfahren nach Anspruch 1, bei dem Röntgenstrahlung in Form von Grauwerten ortsabhängig erfasst wird, ein ortsabhängig erfasster Grauwert mit benachbarten Grauwerten zu einer Region der Ebene 1 zusammengefasst werden, wenn die zugehörigen Grauwertabstände unterhalb eines vorgegebenen Schwellwertes liegen, auf diese Weise auch die weiteren ortsabhängig erfassten Grauwerte zu Regionen der Ebene 1 zusammengefasst werden, eine jede gebildete Region der Ebene 1 einen Grauwert erhält, der durch Mittelung der Grauwerte erhalten wurde, aus denen die Region der Ebene 1 gebildet wurde, die Regionen der Ebene 1 zu Regionen der Ebene 2 zusammengefasst werden, wenn Regionen der Ebene 1 überlappen und zugleich die Regionen einen Grauwertabstand voneinander aufweisen, der unterhalb eines vorgegebenen Schwellwertes liegt, in dieser Weise weiter Regionen einer unteren Ebene zu Regionen einer darüber liegenden Ebene zusammengefasst werden und schließlich die zusammengefassten Regionen der höchsten erreichten Ebene so weiter ausgewertet werden, dass innerhalb der Fügeverbindung aufgetretene Fehler ermittelt werden.

4. Verfahren nach einem der vorhergehenden Ansprüche, wobei das Verfahren durchgeführt wird mit einer Vorrichtung mit Mitteln zum Verbinden von zwei Werkstücken sowie mit einer Mikrofokus-Röntgenanlage, die so angeordnet ist, dass diese einen bereits fertig gestellten Bereich der Fügeverbindung einer noch nicht vollständig hergestellten Fügeverbindung zu durchstrahlen vermag, mit einem Detektor für die Erfassung dieser Röntgenstrahlung sowie eine elektronische Auswerteinheit.

5. Verfahren nach dem vorhergehenden Anspruch, wobei die Vorrichtung so angeordnete, für Röntgenstrahlen durchlässige Platten oder Gehäuse aufweist, dass die Röntgenanlage und der Detektor gegenüber Funken oder Partikel abgeschirmt sind, die durch das Zusammenfügen entstehen können.

6. Verfahren nach einem der beiden vorhergehenden Ansprüche, wobei die Vorrichtung mit Bleimänteln für den Schutz von elektronischen Einrichtungen versehen ist.

7. Verfahren nach einem der drei vorhergehenden Ansprüche, wobei die Vorrichtung Mittel aufweist, um einen festgestellten Fehler innerhalb der Fügeverbindung noch im gleichen Arbeitsschritt beheben zu können.

8. Verfahren nach einem der drei vorhergehenden Ansprüche mit einer FPGA-Karte der Vorrichtung, bei der eine Mehrzahl von Speicherelementen parallel angeordnet sind.

## Claims

1. Method for inspection of a joint (8), in which two workpieces (2, 3) are connected to each other and, whilst being connected, areas of the two workpieces (2, 3), which have already been connected, are penetrated by X-rays (6) and preferably also the joint area and the X-rays (6) are detected and evaluated so that faulty points of the areas, which have already been connected, are ascertained,
in which the X-rays (6) are detected depending on location in the form of grey values, in which such grey values, which are close to each other, are put together, the grey value distance of which is below a preset threshold value, and the regions, which have been put together, are evaluated further so that errors occurring within the joint are ascertained, **characterised in that**, after they have been put together, overlapping areas of regions are assigned separately and only to one region, in which one or several regions of a lower level, which belong to an overlapping area of regions of the highest level, are assigned only to the region of the highest level, for which the grey value distance is smallest,
in which it is established empirically which grey value or which grey value area a faulty area within a joint has and, using this information, it is ascertained automatically which areas within a joint are faulty.

2. Method according to claim 1, in which X-rays are detected depending on location in the form of grey values, a grey value detected depending on location with grey values, which are close, is put together in a region of level 1, if the relevant grey value distances are below a preset threshold value, in this way also futher grey values detected depending on location are put together in regions of level 1, each region of level 1 formed receives a grey value, which was obtained by averaging the grey values, from which the region of level 1 was formed, the regions of level 1 are put together in a similar way in regions of level 2, in this way further regions of a lower level are put together in regions of a leve above and finally the regions of the highest level reached, which have been put together, are evaluated further so that faults occuring within the joint are ascertained.

3. Method according to claim 1, in which X-rays are detected depending on location in the form of grey values, a grey value detected depending on location is put together with grey values, which are close, in a region of level 1, if the relevant grey value distances are below a preset threshold value, in this way also further grey values detected depending on location are put together in regions of level 1, each region of level 1 formed receives a grey value, which was obtained by averaging the grey values, from which the region of level 1 was formed, the regions of level 1 are put together in regions of level 2, if regions of level 1 overlap and at the same time the regions have a grey value distance from each other, which is below a preset threshold value, in this way further regions of a lower level are put together in regions of a level above and finally the regions of the highest level reached, which have been put together, are evaluated so that faults occurring within the joint are ascertained.

4. Method according to one of the previous claims, in which the method is carried out with a device with means for connecting two workpieces and with a microfocus X-ray unit, which is arranged so that this allows an area of the joint, which has already been completed, of a joint, which has not been completely produced, to be penetrated, with a detector for detecting these X-rays and an electronic evaluation unit.

5. Method according to the previous claim, in which the device has plates or a housing, which are permeable to X-rays, which are arranged in such a way that the X-ray unit and detector are shielded from sparks or particles, which may occur when making the joint.

6. Method according to one of both previous claims, in which the device is provided with lead coverings for protecting electronic devices.

7. Method according to one of the three previous claims, in which the device has means for being able to remove a fault established within the joint in the same work step.

8. Method according to one of the three previous claims with an FPGA card for the device, in which a plurality of storage elements are arranged in parallel.

## Revendications

1. Procédé de contrôle d'une liaison d'assemblage (8), pour laquelle deux pièces (2, 3) sont reliées entre elles et des zones déjà reliées pendant la liaison des deux pièces (2, 3) sont irradiées avec des rayons X (6) ainsi que de préférence aussi la zone d'assemblage et les rayons X (6) sont détectés et évalués de sorte que des points défectueux des zones déjà reliées soient déterminés, pour lequel les rayons X (6) sont détectés en fonction du lieu sous la forme de valeurs de gris, de telles valeurs de gris contiguës étant réunies, dont la distance entre valeurs de gris se trouve sous une valeur seuil prescrite et les régions réunies étant encore évaluées de sorte que des défauts survenus dans la liaison d'assemblage soient déterminés, **caractérisé en ce que** des zones chevauchantes suite à la réunion de régions sont séparées et sont associées à une seule région, et ce **en ce qu'**une ou plusieurs régions d'un plan inférieur qui appartiennent à une zone de chevauchement de régions du plan le plus haut, ne sont encore associées qu'à la région du plan le plus haut, pour lequel la distance entre les valeurs de gris est la plus faible,
pour lequel il est constaté empiriquement quelle valeur de gris ou quelle zone de valeurs de gris une zone défectueuse dans une liaison d'assemblage présente et à l'aide de cette information, il est déterminé de manière automatisée quelles zones dans une liaison d'assemblage sont défectueuses.

2. Procédé selon la revendication 1, pour lequel des rayons X sont détectés en fonction du lieu sous la forme de valeurs de gris, une valeur de gris détectée en fonction du lieu étant réunie avec des valeurs de gris contigües en une région du plan 1 lorsque les distances entre les valeurs de gris afférentes se trouvent sous une valeur seuil prescrite, les autres valeurs de gris détectées en fonction du lieu étant également réunies de cette manière en régions du plan 1, chaque région formée du plan 1 recevant une valeur de gris qui a été obtenue en faisant la moyenne des valeurs de gris, à partir desquelles la région du plan 1 a été formée, les régions du plan 1 étant réunies de manière analogue en régions du plan 2, d'autres régions d'un plan inférieur étant réunies de cette manière en régions d'un plan supérieur et finalement les régions réunies du plan le plus haut obtenu étant encore évaluées de sorte que des défauts survenus dans la liaison d'assemblage soient déterminés.

3. Procédé selon la revendication 1, pour lequel des rayons X sont détectés en fonction du lieu sous la forme de valeurs de gris, une valeur de gris détectée en fonction du lieu étant réunie avec des valeurs de gris contigües en une région du plan 1 lorsque les distances entre valeurs de gris afférentes se trouvent sous une valeur seuil prescrite, les autres valeurs de gris détectées en fonction du lieu sont aussi réunies de cette manière en régions du plan 1, chaque région formée du plan 1 reçoit une valeur de gris qui a été obtenue en faisant la moyenne des valeurs de gris, à partir desquelles la région du plan 1 a été formée, les régions du plan 1 sont réunies en régions du plan 2 lorsque des régions du plan 1 se chevauchent et en même temps, les régions présentent une distance entre valeurs de gris qui se trouve sous une valeur seuil prescrite, d'autres régions d'un plan inférieur étant réunies de cette manière en régions d'un plan supérieur et finalement les régions réunies du plan le plus haut obtenu sont encore évaluées de sorte que des défauts survenus dans la liaison d'assemblage soient déterminés.

4. Procédé selon l'une quelconque des revendications précédentes, le procédé étant réalisé avec un dispositif présentant des moyens de liaison de deux pièces ainsi qu'avec une installation radiologique à microfocus qui est disposée de sorte que celle-ci puisse irradier une zone déjà achevée de la liaison d'assemblage d'une liaison d'assemblage pas encore totalement fabriquée, avec un détecteur pour la détection de ces rayons X ainsi qu'une unité d'évaluation électronique.

5. Procédé selon la revendication précédente, le dispositif présentant des plaques ou un boîtier perméable aux rayons X, disposé de sorte que l'installation radiologique et le détecteur soient blindés par rapport aux étincelles ou particules qui peuvent apparaître de par l'assemblage.

6. Procédé selon l'une quelconque des deux revendications précédentes, le dispositif étant pourvu d'enveloppes de plomb pour la protection de dispositifs électroniques.

7. Procédé selon l'une quelconque des trois revendications précédentes, le dispositif présentant des moyens afin de pouvoir remédier à un défaut constaté dans la liaison d'assemblage encore dans la même étape de travail.

8. Procédé selon l'une quelconque des trois revendications précédentes avec une carte FPGA du dispositif, pour lequel une pluralité d'éléments accumulateurs est disposée en parallèle.
